# EUROPEAN PATENT APPLICATION

(11) **EP 3 557 417 A1**
(43) Date of publication of application: **23.10.2019**
(21) Application number: 17879697.5
(22) Date of filing: 01.12.2017
(51) Int. Cl.: G06F 9/50, B25J 9/16, B25J 13/00, G05B 13/02, G06N 99/00

(54) **INFORMATION PROCESSING DEVICE AND INFORMATION PROCESSING METHOD**

(30) Priority: 16.12.2016 JP 2016244046
(71) Applicant: Sony Corporation, Tokyo 108-0075 (JP)
(72) Inventor: NODA Atsushi, Tokyo 108-0075 (JP); TANAKA Yasufumi, Tokyo 108-0075 (JP); KOBAYASHI Yoshiyuki, Tokyo 108-0075 (JP); MATSUNAGA Hideyuki, Tokyo 108-0075 (JP); TAKAMATSU Shingo, Tokyo 108-0075 (JP)
(74) Representative: MFG Patentanwälte Meyer-Wildhagen Meggle-Freund Gerhard PartG mbB
(86) International application number: PCT/JP2017/043235
(87) International publication number: WO 2018/110314

(57) **Abstract**

The present technology relates to an information processing apparatus and an information processing method that enable agents with different skills to cooperate with each other to efficiently execute a task.

An information processing apparatus includes an allocation section configured to assign at least a part of a task to two or more agents on the basis of a skill model indicating a skill of each of the agents. An information processing method includes an allocation step of assigning at least a part of a task to two or more agents on the basis of a skill model indicating a skill of each of the agents. The present technology can be applied to, for example, an agent system in which a plurality of agents cooperates with each other to execute a task.

## Description

### [Technical Field]

The present technology relates to an information processing apparatus and an information processing method, and particularly relates to an information processing apparatus and an information processing method that are suitable for use in a case where a plurality of agents cooperates with each other to execute a task.

### [Background Art]

Conventionally, a technology for learning an operation of grasping an object with a plurality of arm-type robots using deep learning has been disclosed (for example, see Non Patent Literature 1) .

### [Citation List]

### [Non Patent Literature]

[NPL 1]
Sergey Levine and three others, "Learning HandEye Coordination for Robotic Grasping with Deep Learning and Large-Scale Data Collection," 2016

### [Summary]

### [Technical Problems]

However, in the invention described in Non Patent Literature 1, a common policy is learned assuming that all robots are the same model, and it is not considered that robots with different skills cooperate with each other to execute a task.

In view of the foregoing, the present technology enables agents (for example, robots and the like) with different skills to cooperate with each other to efficiently execute a task.

### [Solution to Problems]

An information processing apparatus according to one aspect of the present technology includes an allocation section configured to assign at least a part of a task to two or more agents on the basis of a skill model indicating a skill of each of the agents.

A presentation control section configured to control presentation of information regarding at least one of the task and agents can be further included.

The presentation control section can control presentation of a skill of an agent capable of increasing efficiency of the task.

The presentation control section can control presentation of a skill necessary for the task.

The presentation control section can control presentation of skills of agents configured to execute the task.

The presentation control section can further control presentation of a skill of an agent capable of serving as an addition or a replacement.

A communication section configured to receive, from each of the agents, a work report that includes information including: an action executed; a state before execution of the action; and a reward for the action can be further included.

A learning section configured to learn, on the basis of the work report, data to be used for allocation of the task can be further included.

The learning section can learn a type of a skill defining the skill model on the basis of a result of clustering of data distributed, the data including a combination of the state and the action and being generated on the basis of the work report.

The learning section can learn data indicating a skill necessary for each of tasks on the basis of the work report.

The learning section can learn the skill model of each of the agents on the basis of the work report.

A communication section configured to receive the skill model of each of the agents can be further included.

The allocation section can assign at least the part of the task to the agents further on the basis of a state of each of the agents.

The allocation section can divide the task into a plurality of subtasks and assign the subtasks to the agents.

The allocation section can further divide the subtasks into actions and assign the actions to the agents, the actions being execution units of the agents.

An execution section configured to execute the task can be further included. Each of the two or more agents can include the information processing apparatus.

An information processing method according to one aspect of the present technology includes an allocation step of assigning at least a part of a task to two or more agents on the basis of a skill model indicating a skill of each of the agents.

According to one aspect of the present technology, at least a part of a task is assigned to two or more agents on the basis of a skill model indicating a skill of each of the agents.

### [Advantageous Effect of Invention]

According to one aspect of the present technology, agents with different skills are capable of cooperating with each other to execute a task. Particularly, according to one aspect of the present technology, agents with different skills are capable of cooperating with each other to efficiently execute a task.

It is noted that the effects described herein are not necessarily limitative, and any of the effects described in the present disclosure may be provided.

### [Brief Description of Drawings]

FIG. 1 is a block diagram depicting a first embodiment of an agent system to which the present technology is applied.
FIG. 2 is a block diagram depicting an example of a configuration of an instruction agent in FIG. 1.
FIG. 3 is a diagram depicting examples of skill models.
FIG. 4 is a diagram depicting an example of a task table.
FIG. 5 is a diagram depicting an example of a work history map.
FIG. 6 is a block diagram depicting an example of a configuration of a work agent in FIG. 1.
FIG. 7 is a flowchart for describing processes of the instruction agent.
FIG. 8 is a flow diagram for describing processes of the agent system in FIG. 1.
FIG. 9 is a flowchart for describing details of a work instruction process.
FIG. 10 is a diagram for describing a method for work assignment.
FIG. 11 is a diagram depicting a first example of presented information.
FIG. 12 is a diagram depicting a second example of the presented information.
FIG. 13 is a diagram depicting a third example of the presented information.
FIG. 14 is a flowchart for describing details of a learning process.
FIG. 15 is a diagram depicting a first definition method for skills.
FIG. 16 is a diagram depicting a second definition method for the skills.
FIG. 17 is a diagram depicting a third definition method for the skills.
FIG. 18 is a diagram for describing a method for updating a skill group.
FIG. 19 is a diagram for describing a method for learning a skill model.
FIG. 20 is a flowchart for describing processes of the work agent.
FIG. 21 is a block diagram depicting a second embodiment of an agent system to which the present technology is applied.
FIG. 22 is a block diagram depicting an example of a configuration of a work agent in FIG. 21.
FIG. 23 is a flow diagram for describing processes of the agent system in FIG. 21.
FIG. 24 is a block diagram depicting an example of a configuration of a computer.

### [Description of Embodiments]

Hereinafter, modes for carrying out the invention (hereinafter referred to as "embodiments") will be described in detail with reference to the drawings. It is noted that description will be given in the following order.
1. First embodiment (a case where an instruction agent exists)
2. Second embodiment (a case where no instruction agent exists)
3. Modification
4. Application example

### <<1. First Embodiment>>

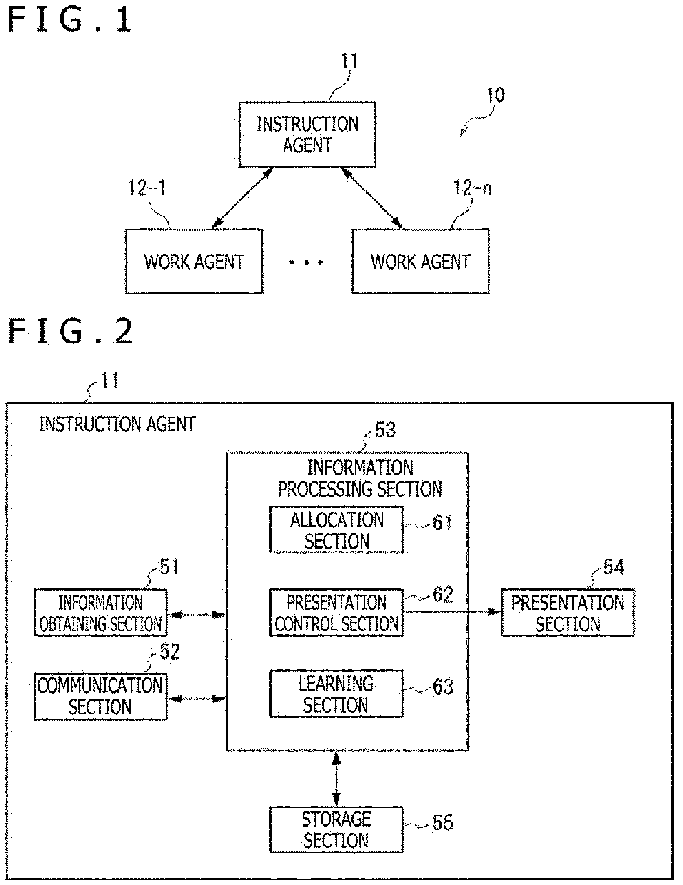

First, the first embodiment of the present technology will be described with reference to FIGs. 1 to 20.

### <Example of Configuration of Agent System 10>

FIG. 1 depicts an example of a configuration of an agent system 10 to which the present technology is applied.

The agent system 10 includes an instruction agent 11 and work agents 12-1 to 12-n. The agent system 10 is a system in which each agent cooperates with each other to execute various tasks. The agent system 10 can be implemented either in the real world or virtual world such as a computer simulation.

Here, an agent refers to a real or virtual entity that executes various tasks using software, hardware, and the like. For example, in a case where the agent is a robot, the agent includes not only a robot that actually exists but also a robot that virtually exists in a simulation or the like with a computer. Further, the agent can also include a living thing such as a human.

Further, there is no particular limitation to the tasks to be executed by the agent system 10. The agent system 10 is capable of executing any tasks.

The instruction agent 11 is an agent that instructs each work agent 12 to execute a given task.

The work agents 12-1 to 12-n are agents that cooperate with each other to execute a task according to instructions from the instruction agent 11. It is noted that the number of work agents 12-1 to 12-n can be set to an arbitrary number of two or more. Further, the work agents 12-1 to 12-n are individually different and include at least two types of agents with different skills.

It is noted that hereinafter, in a case where the work agents 12-1 to 12-n do not need to be individually distinguished from each other, the work agents 12-1 to 12-n will be simply referred to as a work agent 12.

Further, hereinafter, description will be mainly given taking, as an example, a case where the instruction agent 11 and each work agent 12 are robots that virtually exist in a simulation with a computer or the like.

### <Example of Configuration of Instruction Agent 11>

FIG. 2 depicts an example of a configuration of functions of the instruction agent 11. The instruction agent 11 includes an information obtaining section 51, a communication section 52, an information processing section 53, a presentation section 54, and a storage section 55.

The information obtaining section 51 includes, for example, a device that is capable of obtaining information from the outside such as various sensors and various input devices, and the like. The information obtaining section 51 obtains various pieces of information from the outside. The information obtaining section 51 supplies the obtained information to the information processing section 53.

The communication section 52 includes, for example, a communication device using an arbitrary method, and the like, and communicates with each work agent 12. The communication section 52 supplies data received from each work agent 12 to the information processing section 53. Further, the communication section 52 obtains, from the information processing section 53, data to be transmitted to each work agent 12.

The information processing section 53 includes, for example, a device such as a processor that performs information processes, and the like. The information processing section 53 performs various information processes of the instruction agent 11. The information processing section 53 includes an allocation section 61, a presentation control section 62, and a learning section 63.

The allocation section 61 allocates tasks, which are to be executed by each work agent 12, on the basis of the information obtained from the outside and each work agent 12 via the information obtaining section 51 and the communication section 52. Further, the allocation section 61 instructs each work agent 12 to execute the assigned tasks via the communication section 52.

The presentation control section 62 controls presentation of various pieces of information by the presentation section 54 using images, sounds, light, and the like.

The learning section 63 learns data used for allocation of the tasks. For example, the learning section 63 learns a skill model, a skill group, and a task table.

The skill model is a model that indicates skills of each work agent 12. For example, the learning section 63 obtains the skill model of each work agent 12 from the outside (for example, the user), and updates the skill model according to a learning process as appropriate.

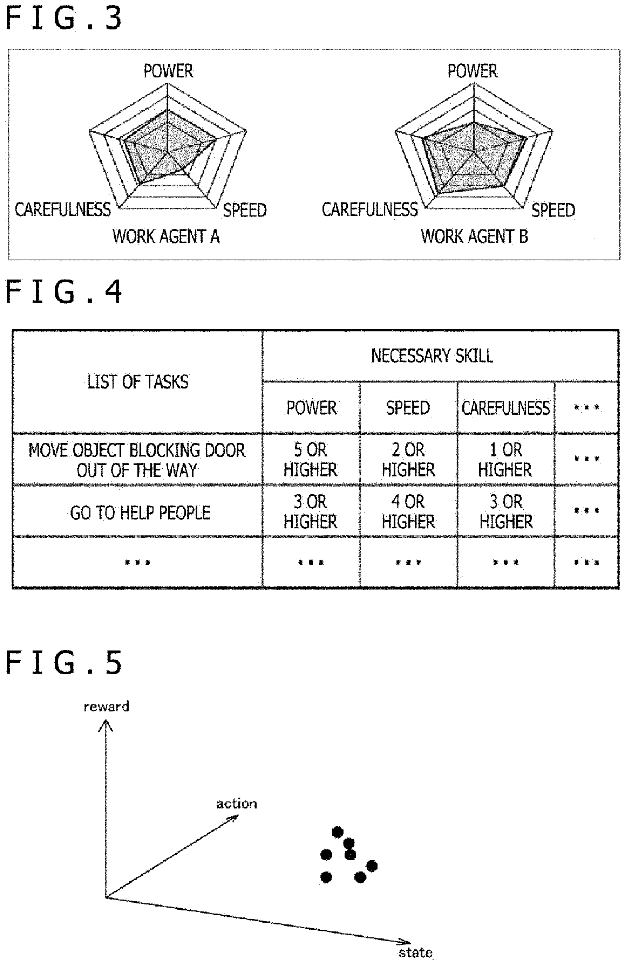

FIG. 3 depicts examples of skill models of a work agent A and a work agent B that are represented as radar charts. In these examples, the levels of various skills including the power, speed, and carefulness are represented numerically.

The skill group is data that represents the types of skills that define the skill model. For example, the learning section 63 obtains the skill group from the outside (for example, the user), and updates the skill group through the learning process as appropriate.

The task table is data that indicates skills necessary for each task. FIG. 4 depicts an example of the task table. Tasks that can be executed by each work agent 12 are registered in the task table. Further, the task table indicates the level of each skill necessary to execute each task. For example, the task table indicates that a task of "moving an object blocking a door out of the way" needs the power to be level 5 or higher, the speed to be level 2 or higher, and the carefulness to be level 1 or higher. For example, the learning section 63 obtains the task table from the outside (for example, the user), and updates the task table through the learning process as appropriate.

Further, the learning section 63 generates a work history map on the basis of a work report from each work agent 12.

FIG. 5 depicts an example of the work history map. The work history map has three axes of a state, an action, and a reward, for example. The work history map depicts distribution of data including a combination of: an action executed by each work agent 12; a state before the action is executed (hereinafter referred to as a pre-state); and a reward for the action executed.

The presentation section 54 includes, for example, a display, a speaker, a light-emitting device, and the like, and presents various pieces of information using images, sounds, light, and the like.

The storage section 55 includes various storage media, for example, and stores data, programs, and the like necessary for the processes of the instruction agent 11. For example, the storage section 55 stores the skill model, the task table, the work history map, and the like of each work agent 12.

### <Example of Configuration of Work Agent 12>

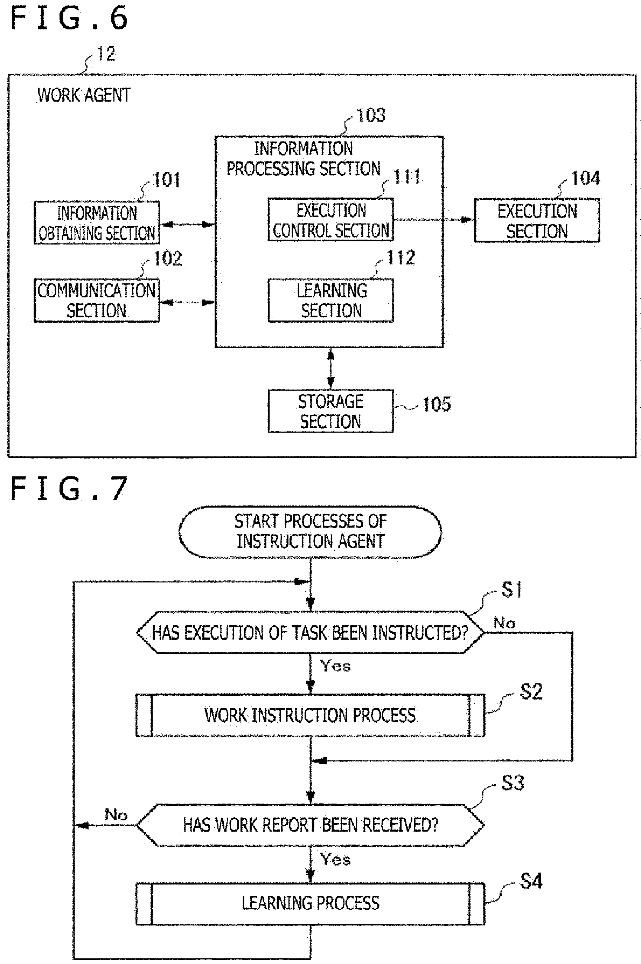

FIG. 6 depicts an example of a configuration of functions of the work agent 12. The work agent 12 includes an information obtaining section 101, a communication section 102, an information processing section 103, an execution section 104, and a storage section 105.

The information obtaining section 101 includes, for example, a device that is capable of obtaining information from the outside such as various sensors and various input devices, and the like. The information obtaining section 101 obtains various pieces of information from the outside. The information obtaining section 101 supplies the obtained information to the information processing section 103.

The communication section 102 includes, for example, a communication device using an arbitrary method, and the like, and communicates with the instruction agent 11. The communication section 102 supplies data received from the instruction agent 11 to the information processing section 103. Further, the communication section 102 obtains, from the information processing section 103, data to be transmitted to the instruction agent 11.

The information processing section 103 includes, for example, a device such as a processor that performs information processes, and the like. The information processing section 103 performs various information processes of the work agent 12. The information processing section 103 includes an execution control section 111 and a learning section 112.

The execution control section 111 controls execution of a task (more specifically, actions broken down from the task) by the execution section 104 on the basis of the information obtained from the outside and the instruction agent 11 via the information obtaining section 101 and the communication section 102. Further, the execution control section 111 detects a state (pre-state) before execution of an action and a state after the execution of the action (hereinafter referred to as a post-state) on the basis of the information obtained from the outside via the information obtaining section 101. In addition, the execution control section 111 obtains a reward for the executed action via the information obtaining section 101 or the communication section 102 and the like. Further, the execution control section 111 transmits a work report including information regarding the executed action to the instruction agent 11 via the communication section 102.

The learning section 112 learns a method for executing a task (for example, a combination of actions for executing the task, and the like) on the basis of the information obtained from the outside and the instruction agent 11 via the information obtaining section 101 and the communication section 102.

The execution section 104 includes a device for executing a task (more specifically, various actions), and the like. There is no particular limitation to the types of actions that can be executed by the execution section 104. For example, the types of actions include not only physical actions such as an equilibrium system, a mobile system, and an operation system, but also actions such as thought, calculation, analysis, and creation that are equivalent to psychological activities of humans. Moreover, the types and levels of actions that can be executed by the execution section 104 are set for each work agent 12.

The storage section 105 includes various storage media, for example, and stores programs, data, and the like necessary for the processes of the work agent 12.

### <Processes of Agent System 10>

Next, the processes of the agent system 10 will be described with reference to FIGs. 7 to 20.

### <Processes of Instruction Agent 11>

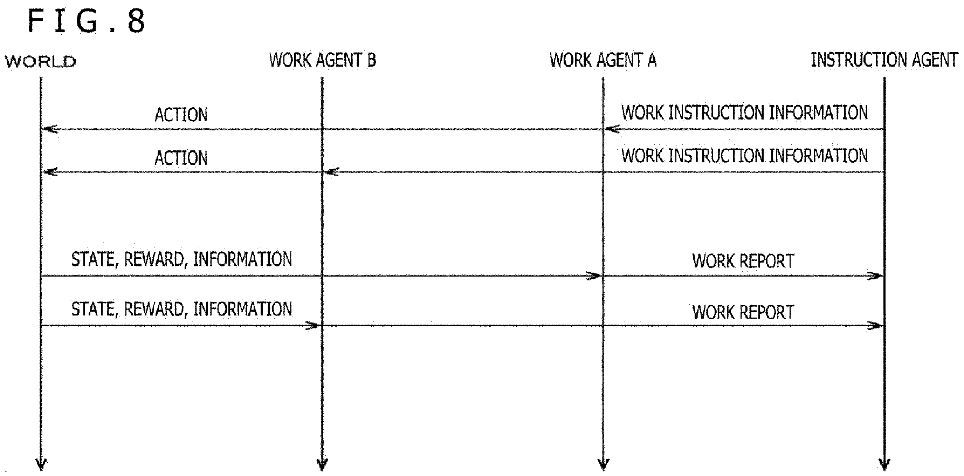

First, the processes of the instruction agent 11 will be described with reference to a flowchart in FIG. 7 and a flow diagram in FIG. 8.

It is noted that the flow diagram in FIG. 8 depicts a flow of data among the instruction agent 11, the two work agents 12 of the work agent A and the work agent B, and the world (real world or virtual world).

In step S1, the allocation section 61 determines whether execution of a task has been instructed. For example, the user inputs task instruction information to the instruction agent 11. The task instruction information indicates a task to be executed by the agent system 10. In a case where the allocation section 61 has obtained the task instruction information input via the information obtaining section 51, the allocation section 61 determines that the execution of the task has been instructed, and the process proceeds to step S2.

It is noted that although there is no particular limitation to the task instruction method, it is possible to give an instruction with relatively abstract contents such as "provide disaster relief" and "build a house," for example. Further, it is also possible to give instructions for a plurality of tasks at once.

In step S2, the instruction agent 11 executes a work instruction process. After that, the process proceeds to step S3.

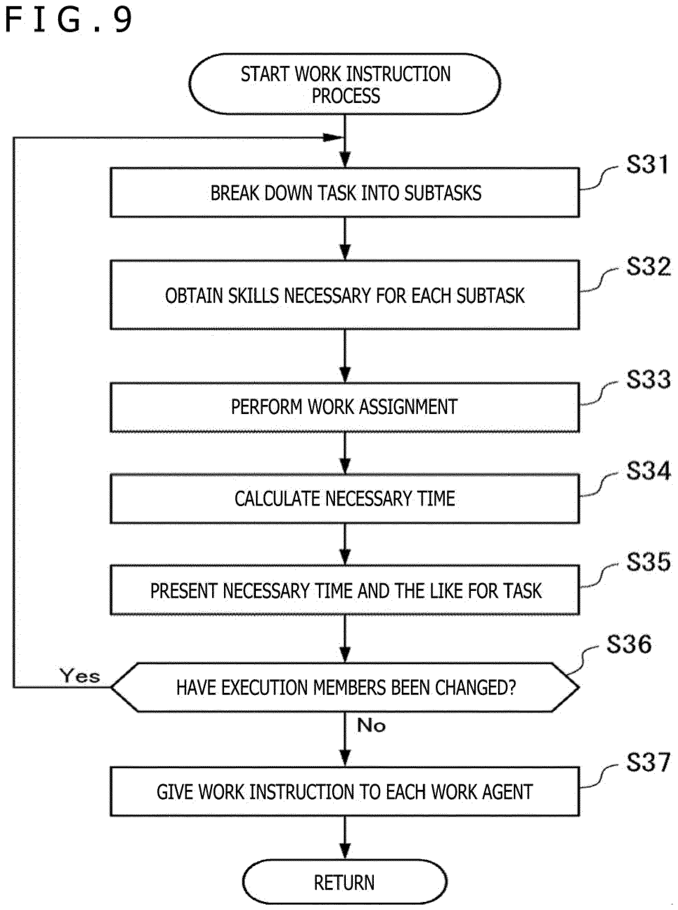

Here, the details of the work instruction process will be described with reference to a flowchart in FIG. 9.

In step S31, the allocation section 61 breaks down the task into subtasks. For example, the allocation section 61 breaks down a given task until a level at which the allocation section 61 can instruct each work agent 12. Accordingly, the given task is broken down into one or more subtasks. It is noted that hereinafter, in a case where a task before broken down into subtasks is distinguished from a subtask, the task will be referred to as a main task.

For example, a main task of "providing disaster relief" is broken down into subtasks such as "moving an object blocking a door out of the way" and "going to help people." It is noted that in a case where the main task is simple, the main task and the subtask may be equal to each other.

At this time, the allocation section 61 appropriately breaks down the main task into subtasks on the basis of the composition of the work agents 12 that cooperate with each other to execute the main task (hereinafter referred to as execution members), such that the main task can be executed more efficiently.

In step S32, the allocation section 61 obtains skills necessary for each subtask on the basis of the task table (FIG. 4) stored in the storage section 55.

In step S33, the allocation section 61 performs work assignment. Specifically, the allocation section 61 assigns the subtasks (at least a part of the main task) to each work agent 12 on the basis of the skills necessary for each subtask and the skill model of each work agent 12 stored in the storage section 55.

For example, the allocation section 61 extracts, for each subtask, the work agents 12 having the skills that allow execution thereof on the basis of the skill model of each work agent 12. Then, the allocation section 61 determines the subtasks to be assigned to each work agent 12 in consideration of work efficiency, working time, and the like.

At this time, the allocation section 61 may allocate the subtasks in consideration of the state of each work agent 12. For example, the allocation section 61 generates a search map on the basis of the information from each work agent 12. The search map depicts the position of each work agent 12, locations where the subtasks are to be executed, and the like. Then, the allocation section 61 performs the work assignment on the basis of a positional relationship between each work agent 12 and the locations where the subtasks are to be executed, in addition to the skill model of each work agent 12.

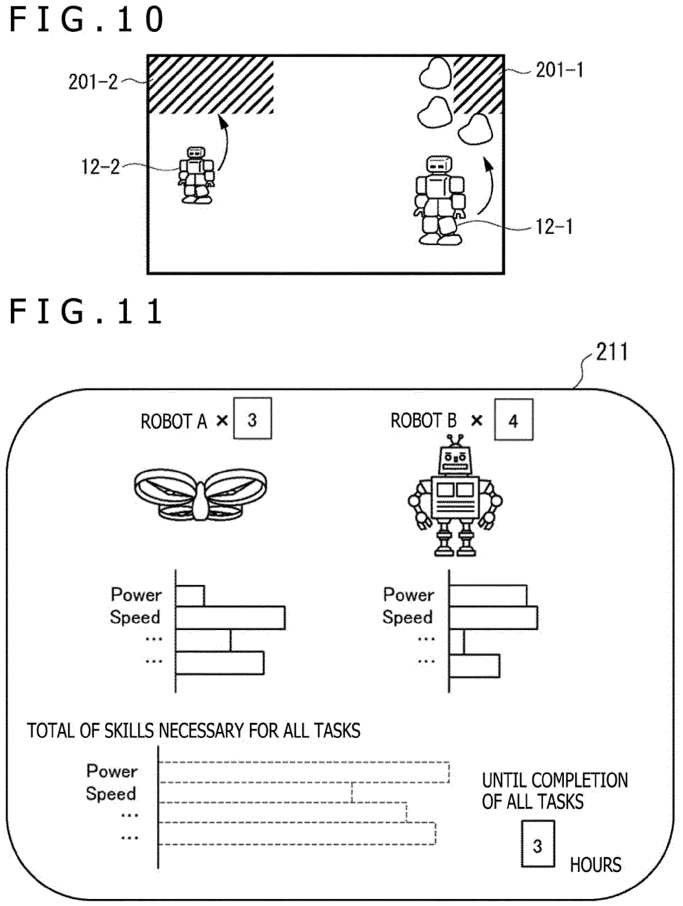

For example, as depicted in FIG. 10, a subtask at a neighboring field 201-1 is assigned to the work agent 12-1 while a subtask at a neighboring field 201-2 is assigned to the work agent 12-2.

Further, for example, the allocation section 61 generates a search map for state-action pairs on the basis of information from each work agent 12. Then, the allocation section 61 causes the work agent 12 close to the state of a state-action pair which has not been searched for to execute the search for the state-action pair. With this configuration, for example, in a case where the agent system is implemented by a computer simulation, it is possible to more quickly collect data for many types of state-action pairs and more quickly converge the results of the simulation.

In addition, for example, the allocation section 61 determines the work assignment on the basis of a context (for example, a context, a situation) of a given task (main task). For example, in a case where the allocation section 61 is given a task of "cleaning up," the allocation section 61 determines, depending on the situation, which work agent 12 is assigned subtasks, the work agent 12 that cleans a floor or the work agent 12 that cleans a desk.

In step S34, the allocation section 61 calculates necessary time. That is, the allocation section 61 calculates the time necessary to complete the main task after completion of all the subtasks on the basis of the subtasks assigned to each work agent 12 and the skill of each work agent 12.

In step S35, the presentation section 54 presents the necessary time and the like for the task under the control of the presentation control section 62. Here, specific examples of presented information will be described with reference to FIGs. 11 to 13. It is noted that FIGs. 11 to 13 depict examples of information presented in a case where the agent system 10 is implemented in the virtual world such as a computer simulation.

A window 211 in FIG. 11 depicts information regarding the execution members (for example, the types, the number, and the skill models of the work agents 12). Specifically, the window 211 in FIG. 11 depicts the number of a drone-type robot A, the number of a humanoid-type robot B, and bar charts depicting the skill models thereof. The drone-type robot A and the humanoid-type robot B are the execution members. Further, the window 211 in FIG. 11 depicts the total values of various skills necessary for the main task (all the subtasks). In addition, the window 211 in FIG. 11 depicts the necessary time (specifically, three hours) to complete the main task (all the subtasks).

With this configuration, the user is able to easily grasp the composition of the execution members, the load of each skill for the main task, the time necessary for the main task, and the like.

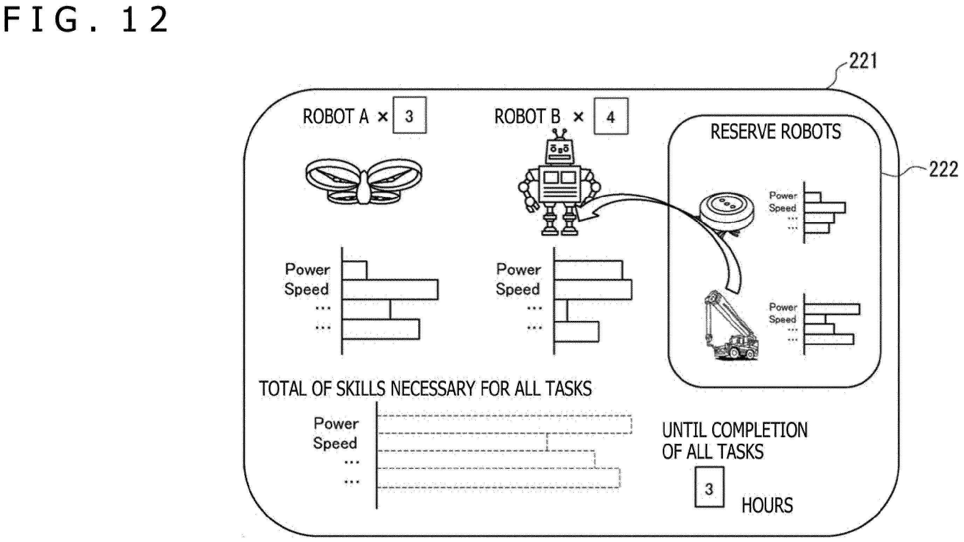

A window 221 in FIG. 12 is different compared to the window 211 in FIG. 11 in that a reserve member field 222 is added.

Here, a reserve member refers to the work agent 12 that is not an execution member at this point of time but can be added as an execution member or replace an execution member.

The reserve member field 222 depicts the types and the skill models of reserve members (in this example, reserve robots). Specifically, a disc-type robot and a crane-type robot are registered as the reserve members, and the skill model of each robot is depicted.

For example, the user is able to drag the work agent 12 in the reserve member field 222 and drop the work agent 12 outside the reserve member field 222 to add the work agent 12 as an execution member. Further, the user is able to drag the work agent 12 outside the reserve member field 222 and drop the work agent 12 in the reserve member field 222 to remove the work agent 12 from the execution members and set the work agent 12 as a reserve member.

With this configuration, the user is able to easily change the execution members. Further, when the execution members have been changed, the time necessary for the main task with the changed execution members is calculated as described later and displayed in the window 221. Accordingly, the user is able to easily select appropriate execution members with high work efficiency.

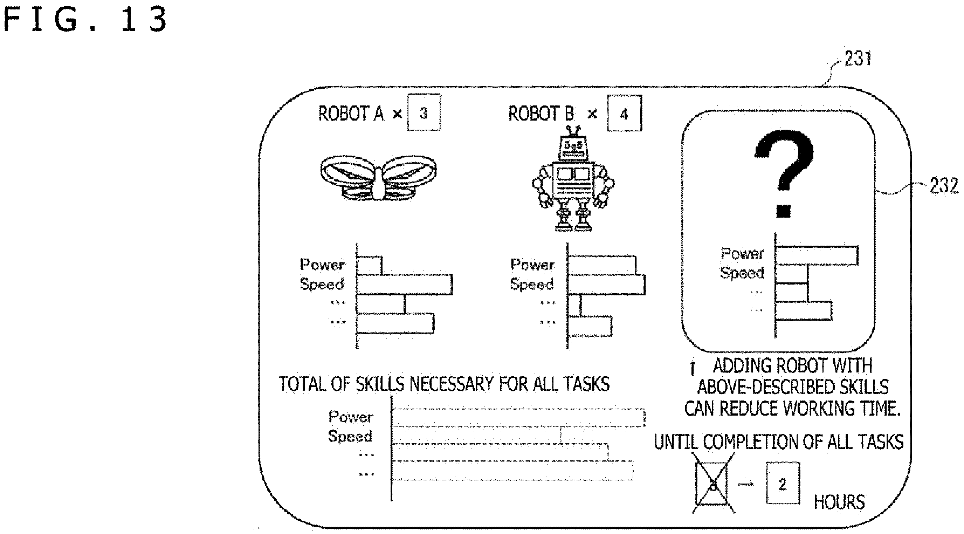

A window 231 in FIG. 13 is different compared to the window 211 in FIG. 11 in that a recommended spec field 232 is added.

The recommended spec field 232 depicts the skill model of the work agent 12 that is recommended to be added as an execution member. In other words, the recommended spec field 232 depicts the skill model of the work agent 12 with which efficiency of the task can be increased by being added (for example, the work agent 12 with which the time necessary for the task can be significantly shorten). Further, a message is depicted below the recommended spec field 232. The message indicates that the working time can be reduced in a case where the work agent 12 having the skill model depicted in the recommended spec field 232 is added. In addition, the time necessary for the main task before the recommended work agent 12 is added as an execution member and the time necessary for the main task after the recommended work agent 12 is added as an execution member are depicted below the message.

With this configuration, the user is able to easily grasp which work agent 12 having the skill model needs to be added to increase the work efficiency and shorten the time necessary for the main task. As a result, the user is able to add the appropriate work agent 12 as an execution member.

Returning to FIG. 9, in step S36, the allocation section 61 determines whether the execution members have been changed. For example, in a case where the user changes the execution members, the user inputs execution member change information to the instruction agent 11. The execution member change information is an instruction to change the execution members. In a case where the allocation section 61 has obtained the execution member change information input via the information obtaining section 51, the allocation section 61 determines that the execution members have been changed, and the process returns to step S31.

After that, in step S36, the processes in steps S31 to S36 are repeatedly executed until it is determined that the execution members have not been changed. That is, each time the execution members are changed, the combination of the subtasks and the work assignment are changed, the time necessary for the main task is recalculated, and the time necessary for the main task and the like are presented again.

On the other hand, in a case where it is determined in step S36 that the execution members have not been changed, the process proceeds to step S37.

In step S37, the allocation section 61 gives a work instruction to each work agent 12. Specifically, the allocation section 61 generates work instruction information for each work agent 12. The work instruction information indicates the subtasks requested by the allocation section 61 to be executed. Then, the allocation section 61 transmits the work instruction information to each work agent 12 via the communication section 52. For example, as depicted in FIG. 8, the instruction agent 11 transmits the work instruction information to the work agent A and the work agent B.

After that, the work instruction process ends.

Returning to FIG. 7, on the other hand, in a case where it is determined in step S1 that the execution of the task has not been instructed, the process in step S2 is skipped and the process proceeds to step S3.

In step S3, the learning section 63 determines whether the learning section 63 has received work reports from the work agents 12.

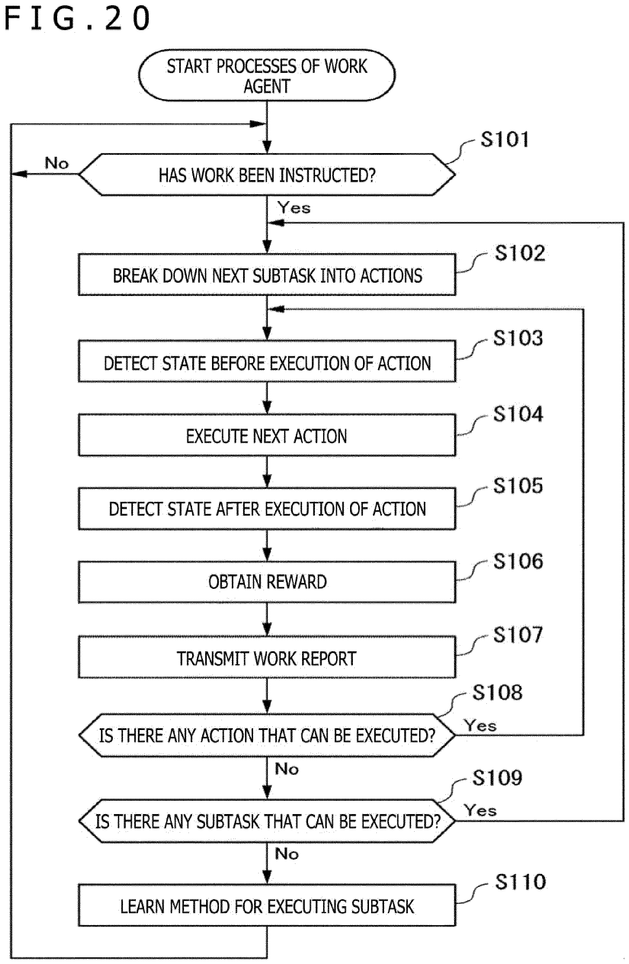

Specifically, after each work agent 12 executes an action in step S104 in FIG. 20 described later, each work agent 12 transmits work information for the executed action in step S107. A work report includes an action executed, a pre-state, a post-state, a reward for the action executed, and other information.

Then, in a case where the learning section 63 determines that the learning section 63 has received the work reports transmitted from the work agents 12 via the communication section 52, the process proceeds to step S4.

In step S4, the learning section 63 executes the learning process. After that, the process returns to step S1.

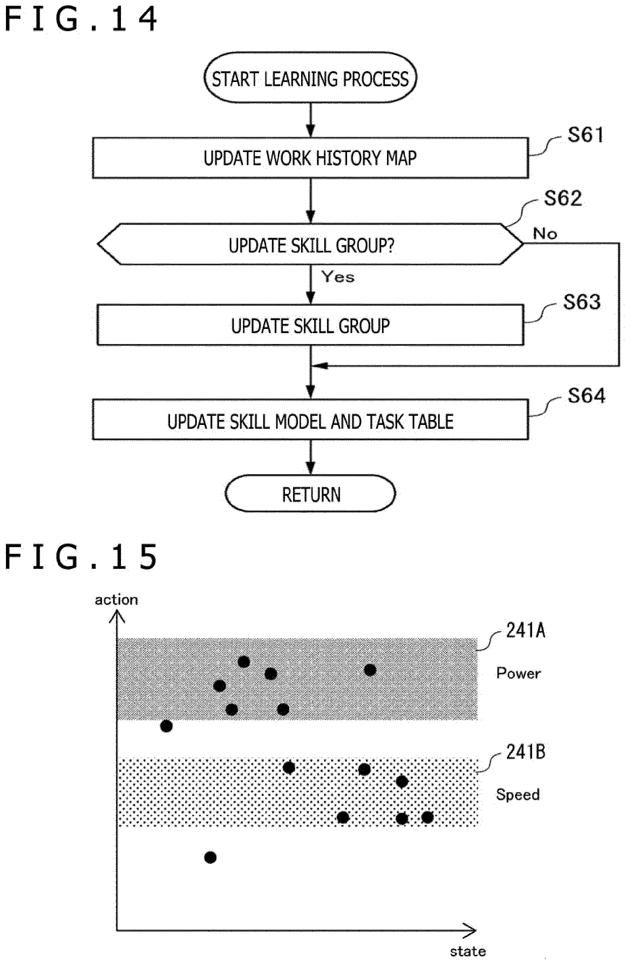

Here, the details of the learning process will be described with reference to a flowchart in FIG. 14.

In step S61, the learning section 63 updates the work history map. Specifically, the learning section 63 adds data indicated in the work report to the work history map. The data includes a combination of the action executed, the pre-state, and the reward for the action executed.

In step S62, the learning section 63 determines whether to update the skill group.

Here, an example of a method for defining a skill in a space map will be described with reference to FIGs. 15 to 17. The space map (hereinafter referred to as a state-action space map) has two axes of a state and an action in the work history map. It is noted that the state-action space map depicts distribution of data generated on the basis of the work report from each work agent 12. The data includes a combination of a state (pre-state) and an action.

FIG. 15 depicts an example in which skills are defined only by actions. For example, power is associated with actions included within a range of a region 241A. That is, the skill necessary for the actions included within the range of the region 241A is defined as power, regardless of the pre-state. For example, the actions included within the range of the region 241A include lifting, pushing, throwing, and the like of an object. Further, for example, speed is associated with actions included within a range of a region 241B. That is, the skill necessary for the actions included within the range of the region 241B is defined as speed, regardless of the pre-state.

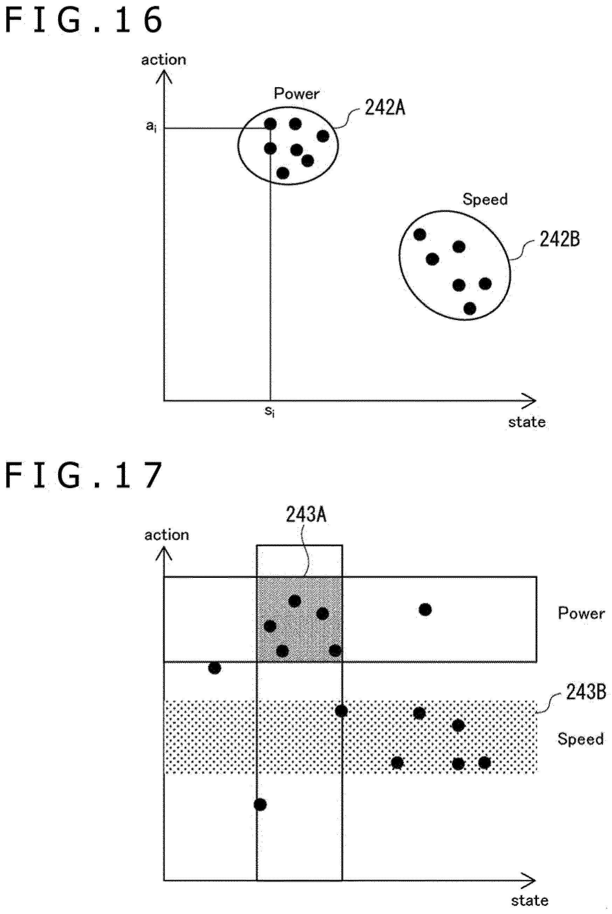

FIG. 16 depicts an example in which the skills are defined by combinations of a pre-state and an action. For example, power is associated with combinations of a state sᵢ and an action aᵢ within a range of a region 242A. That is, the skill, which is necessary to execute any action within the range of the region 242A in a case where the pre-state is within the range of the region 242A, is defined as power. For example, states sᵢ include a state in which an object whose weight is within a predetermined range is in front of the eyes. Actions aᵢ include actions such as lifting, pushing, and throwing of the object. Further, for example, speed is associated with combinations of a state and an action within a range of a region 242B. That is, the skill, which is necessary to execute any action within the range of the region 242B in a case where the pre-state is within the range of the region 242B, is defined as speed.

FIG. 17 depicts an example in which the skills are defined only by actions or by combinations of a pre-state and an action. For example, speed is associated with combinations of a state and an action within a range of a region 243A. That is, the skill, which is necessary to execute any action within the range of the region 243A in a case where the pre-state is within the range of the region 243A, is defined as power. Further, for example, speed is associated with actions included within a range of a region 243B. That is, the skill necessary for the actions included within the range of the region 243B is defined as speed, regardless of the pre-state.

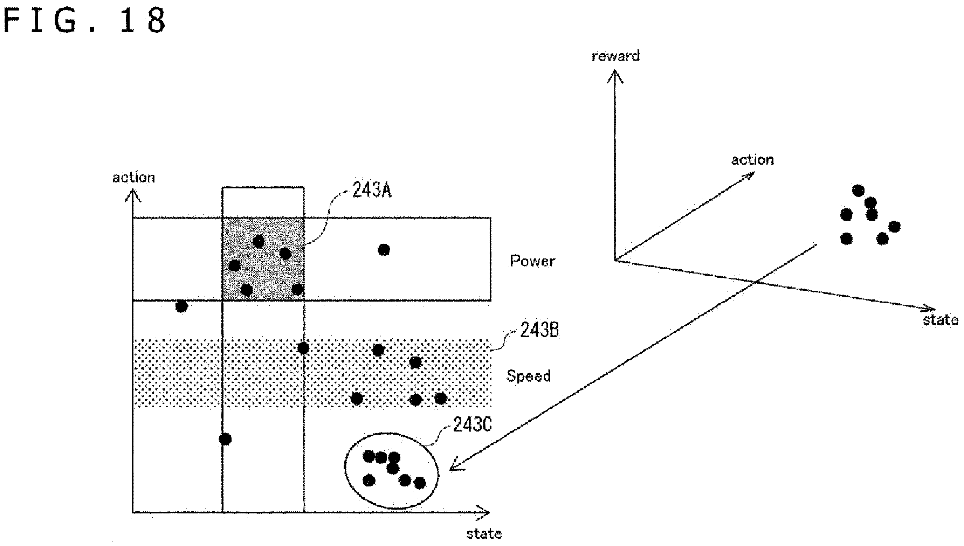

For example, the learning section 63 performs clustering of the data in the work history map. Then, for example, as depicted in FIG. 18, in a case where the result of the clustering has been projected to the state-action space map and when a new cluster 243C has been found, the learning section 63 determines to update the skill group, and the process proceeds to step S63. It is noted that additionally, in a case where the distribution of clusters has been changed due to division, integration, removal, and the like of the clusters, for example, the learning section 63 determines to update the skill group, and the process proceeds to step S63.

In step S63, the learning section 63 updates the skill group. Specifically, the learning section 63 assigns a new skill to a region to which no skill is assigned among the regions corresponding to the clusters in the state-action space map. With this configuration, in a case where a cluster has been added or divided, the types of skills included in the skill group increase. On the other hand, in a case where the clusters have been integrated or deleted, the types of skills included in the skill group decrease. It is noted that the skills set by the learning section 63 are not necessarily the skills that can be interpreted by humans.

In this manner, the skill group is learned through the observation of each work agent 12.

After that, the process proceeds to step S64.

On the other hand, in step S62, in a case where the distribution of the clusters in the state-action space map has not been changed, the learning section 63 determines not to update the skill group, and skips the process in step S63. The process proceeds to step S64.

In step S64, the learning section 63 updates the skill model and the task table. Specifically, in a case where the learning section 63 has updated the skill group, the learning section 63 changes the types of skills in the skill model of each work agent 12 according to the updated skill group.

Further, the learning section 63 updates the skill model of the work agent 12 that has transmitted the work report. Specifically, the learning section 63 detects a skill necessary for the action executed by the work agent 12 or a combination of the pre-state and the action on the basis of the state-action space map.

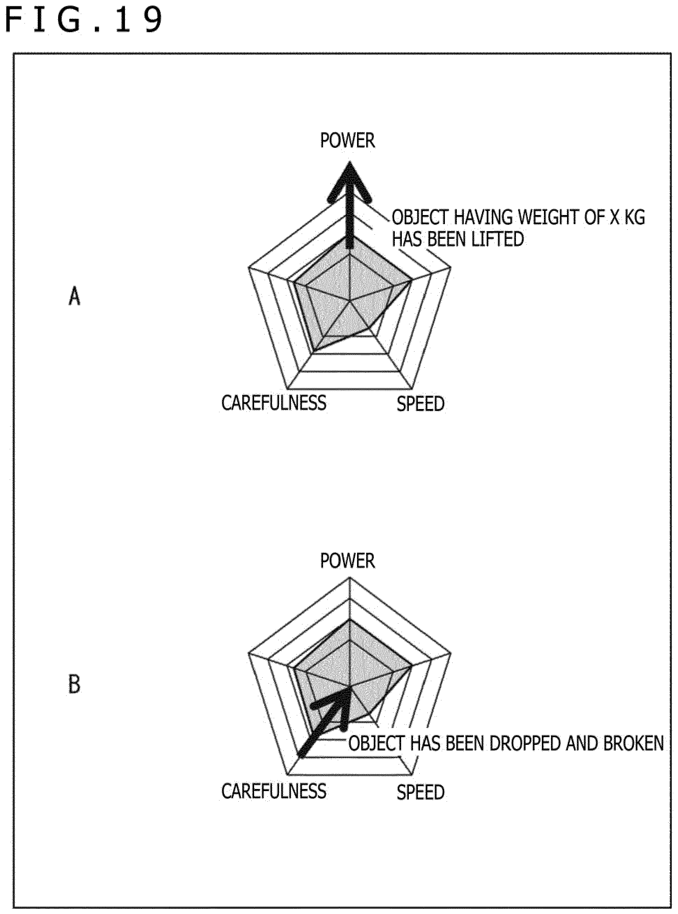

Moreover, for example, in a case where the work agent 12 has obtained a positive reward for the executed action, the learning section 63 increases the level of the corresponding skill in the skill model of the work agent 12. For example, as depicted in A of FIG. 19, in a case where the work agent 12 has lifted an object having a weight of x kg, the level of the power in the skill model increases.

On the other hand, for example, in a case where the work agent 12 has obtained a negative reward for the executed action, the learning section 63 decreases the level of the corresponding skill in the skill model of the work agent 12. For example, as depicted in B of FIG. 19, in a case where the work agent 12 has dropped and broken an object, the level of the carefulness in the skill model decreases.

Further, for example, in a case where the work agent 12 has not obtained any reward for the executed action, the learning section 63 does not change the skill model of the work agent 12.

It is noted that an upper limit may or may not be provided to the level of the skill model. Further, in a case where the upper limit is provided, for example, the level of the skill model may be normalized among each work agent 12.

In this manner, the strength and weakness of each work agent 12 are grasped through the learning of the skill model.

Further, the learning section 63 updates the task table on the basis of the work report, as necessary. For example, in a case where the work agent 12 has executed a new subtask, the learning section 63 adds the subtask to the task table. Further, the learning section 63 updates the value of the necessary skill in the task table on the basis of the subtask executed by the work agent 12 and the skill model of the work agent 12, as necessary.

After that, the learning process ends.

Returning to FIG. 7, on the other hand, in a case where it is determined in step S3 that the work report has not been received, the process returns to step S1 and the processes in and after step S1 are executed.

Next, the processes executed by the work agent 12 corresponding to the processes of the instruction agent 11 in FIG. 7 will be described with reference to a flowchart in FIG. 20 and the flow diagram in FIG. 8.

In step S101, the execution control section 111 determines whether a work has been instructed. Until it is determined that the work has been instructed, the determination process in step S101 is repeatedly executed at predetermined intervals, for example. Then, in a case where the execution control section 111 has received the work instruction information transmitted from the instruction agent 11 in step S37 in FIG. 9 via the communication section 102, the execution control section 111 determines that the work has been instructed, and the process proceeds to step S102.

In step S102, the execution control section 111 breaks down the next subtask into actions. Specifically, in a case where the execution control section 111 has arranged the subtasks indicated in the work instruction information in order of execution, the execution control section 111 selects a subtask to be executed next. It is noted that the execution control section 111 selects a subtask to be executed first in the process in first step S102 after receiving the work instruction information.

Next, the execution control section 111 breaks down the selected subtask into a level (an execution unit of the execution section 104) at which the execution section 104 is executable. Accordingly, the subtask is broken down into one or more actions. It is noted that in a case where the subtask is simple, the subtask and the action may be equal to each other.

In step S103, the execution control section 111 detects a state (pre-state) before the execution of the action on the basis of the information from the information obtaining section 101. That is, the execution control section 111 detects the state of surroundings of the work agent 12 before the execution of the action, in particular, the state of an object or the like for which the action is executed.

At this time, the information obtaining section 101 obtains information other than the state of the surroundings of the work agent 12, as necessary, and supplies the information to the information processing section 103.

In step S104, the execution section 104 executes the next action under the control of the execution control section 111. Specifically, in a case where the execution control section 111 has arranged the actions broken down in the process in step S102 in order of execution, the execution control section 111 selects an action to be executed next. It is noted that the execution control section 111 selects an action to be executed first in the process in the first step S104 after breaking down the subtask into actions.

Next, the execution control section 111 causes the execution section 104 to execute the selected action by controlling the execution section 104.

For example, as depicted in FIG. 8, the work agent A and the work agent B perform respective actions to the world (real world or virtual world) according to the work instruction information received from the instruction agent 11.

In step S105, the execution control section 111 detects a state (post-state) after the execution of the action on the basis of the information from the information obtaining section 101. That is, the execution control section 111 detects the state of the surroundings of the work agent 12 after the execution of the action, in particular, the state of the object or the like for which the action has been executed.

For example, as depicted in FIG. 8, the work agent A and the work agent B detect the state of the world (real world or virtual world) after the execution of the action.

At this time, the information obtaining section 101 obtains information other than the state of the surroundings of the work agent 12, as necessary, and supplies the information to the information processing section 103.

In step S106, the execution control section 111 obtains a reward. Here, any method can be adopted as a method for giving the reward to the work agent 12.

For example, the user may explicitly give the reward to the work agent 12.

Further, for example, a reward for an action, or a reward for a combination of a pre-state and an action may be determined in advance, and in a case where the action has succeeded or failed, the determined reward may be automatically given to the work agent 12.

In addition, for example, the execution control section 111 may recognize the reward on the basis of the post-state. For example, the execution control section 111 may recognize the reward on the basis of a reaction such as the user's facial expression after the execution of the action. For example, in a case where the user has reacted positively, the execution control section 111 recognizes that the positive reward has been given. In a case where the user has reacted negatively, the execution control section 111 recognizes that the negative reward has been given. Further, for example, in a case where the execution control section 111 determines that the action has succeeded on the basis of the post-state, the execution control section 111 recognizes that the positive reward has been given. In a case where the execution control section 111 determines that the action has failed, the execution control section 111 recognizes that the negative reward has been given.

For example, as depicted in FIG. 8, the work agent A and the work agent B receive respective rewards for the executed actions from the world (real world or virtual world).

In step S107, the execution control section 111 transmits a work report. Specifically, the execution control section 111 generates the work report including the action executed, the pre-state, the post-state, the reward for the executed action, and other information. The execution control section 111 transmits the generated work report to the instruction agent 11 via the communication section 102.

For example, as depicted in FIG. 8, the work agent A and the work agent B transmit respective work reports for the executed actions to the instruction agent 11.

In step S108, the execution control section 111 determines whether there is any action that can be executed. In a case where there is an action that has not been executed yet and the action can be executed, the execution control section 111 determines that there is an action that can be executed, and the process returns to step S103.

After that, in step S108, the processes in steps S103 to S108 are repeatedly executed until it is determined that there is no action that can be executed. With this configuration, the actions constituting the subtask are executed in order, and work reports for these actions are transmitted to the instruction agent 11.

On the other hand, in step S108, in a case where all the actions have been executed or in a case where there is an action that has not been executed yet but cannot be executed, the execution control section 111 determines that there is no action that can be executed, and the process proceeds to step S109.

In step S109, the execution control section 111 determines whether there is any subtask that can be executed. In a case where there is a subtask that has not been executed yet and the subtask can be executed, the execution control section 111 determines that there is a subtask that can be executed, and the process returns to step S102.

After that, in step S109, the processes in steps S102 to S109 are repeatedly executed until it is determined that there is no subtask that can be executed. With this configuration, the tasks instructed from the instruction agent 11 are executed in order.

On the other hand, in step S109, in a case where all the subtasks have been completed or in a case where there is a subtask that has not been executed yet but cannot be executed, the execution control section 111 determines that there is no subtask that can be executed, and the process proceeds to step S110.

In step S110, the learning section 112 learns a method for executing the subtask. For example, in a case where a new combination of actions has been performed to execute the subtask and when a large reward has been obtained (for example, when a delayed reward problem has been solved), the learning section 112 causes the storage section 105 to store the series of executed actions as a method for executing the subtask. For example, in a case where destroying an object has allowed movement further forward as a result of several actions and this has made it possible to rescue people, the learning section 112 causes the storage section 105 to store the series of actions taken to destroy the object as one method for executing the subtask of "rescuing people."

After that, the process returns to step S101, and the processes after step S101 are executed.

As described above, each work agent 12 is capable of cooperating with each other to execute a task under the instruction from the instruction agent 11. Further, since the instruction agent 11 learns the task model of each work agent 12 and appropriately allocates the task to each work agent 12 according to this result, the work efficiency increases. As a result, it is possible to shorten the working time and reduce the number of work agents 12 that execute the task.

### <<2. Second Embodiment>>

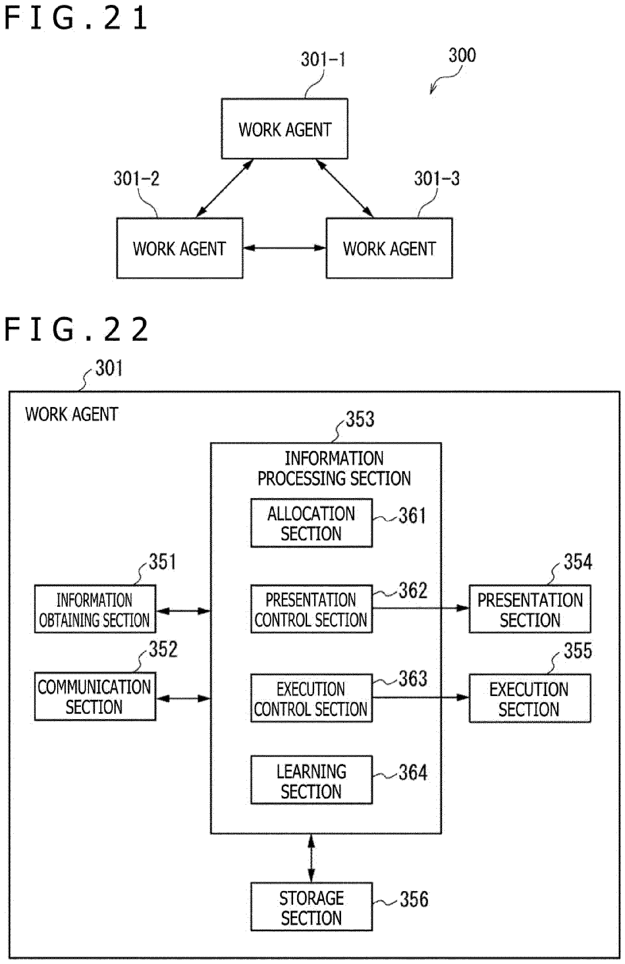

Next, the second embodiment of the present technology will be described with reference to FIGs. 21 to 23.

No instruction agent exists in the second embodiment. Each work agent shares information and cooperates with each other to execute a task.

### <Example of Configuration of Agent System 300>

FIG. 21 depicts an example of a configuration of an agent system 300 to which the present technology is applied.

The agent system 300 includes work agents 301-1 to 301-3.

It is noted that hereinafter, in a case where the work agents 301-1 to 301-3 do not need to be individually distinguished from each other, the work agents 301-1 to 301-3 will be simply referred to as a work agent 301.

Further, FIG. 21 depicts an example in which the agent system 300 includes the three work agents 301 to facilitate understanding of the figure. However, the number of work agents 301 can be set to an arbitrary number of two or more.

### <Example of Configuration of Work Agent 301>

FIG. 22 depicts an example of a configuration of functions of the work agent 301.

The work agent 301 has combined functions of the instruction agent 11 in FIG. 2 and the work agent 12 in FIG. 6. Therefore, the work agent 301 itself executes a task while giving a task instruction to the other work agents 301.

The work agent 301 includes an information obtaining section 351, a communication section 352, an information processing section 353, a presentation section 354, an execution section 355, and a storage section 356.

The information obtaining section 351 has combined functions of the information obtaining section 51 of the instruction agent 11 and the information obtaining section 101 of the work agent 12.

The communication section 352 includes, for example, a communication device using an arbitrary method, and the like, and communicates with the other work agents 301. The communication section 352 supplies data received from the other work agents 301 to the information processing section 353. Further, the communication section 352 obtains, from the information processing section 353, data to be transmitted to the other work agents 301.

The information processing section 353 includes an allocation section 361, a presentation control section 362, an execution control section 363, and a learning section 364.

The allocation section 361 has functions similar to the functions of the allocation section 61 of the instruction agent 11.

The presentation control section 362 has functions similar to the functions of the presentation control section 62 of the instruction agent 11.

The execution control section 363 has functions similar to the functions of the execution control section 111 of the work agent 12.

The learning section 63 has combined functions of the learning section 63 of the instruction agent 11 and the learning section 112 of the work agent 12.

The presentation section 354 has functions similar to the functions of the presentation section 54 of the instruction agent 11.

The execution section 355 has functions similar to the functions of the execution section 104 of the work agent 12.

The storage section 356 includes, for example, various storage media, and stores data, programs, and the like necessary for the processes of the work agent 301.

It is noted that in the agent system 300, not all of the work agents are necessarily configured by the work agent 301 in FIG. 22, and some of the work agents may be configured by the work agent 12 in FIG. 6.

### <Processes of Agent System 300>

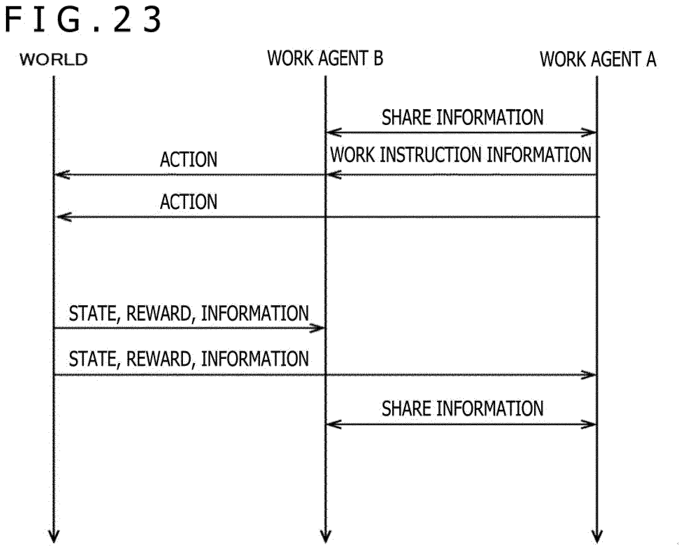

Next, the processes of the agent system 300 will be described with reference to a flow diagram in FIG. 23.

The flow diagram in FIG. 23 depicts a flow of data between two work agents of a work agent A and a work agent B and the world (real world or virtual world). In this example, the work agent A gives instructions and the work agent B receives the instructions. Therefore, the work agent A is configured by the work agent 301 in FIG. 22, and the work agent B is configured by the work agent 12 in FIG. 6 or the work agent 301 in FIG. 22.

For example, the work agent A and the work agent B share information such as skill models and work information of each other. Alternatively, at least the work agent A obtains information such as the skill model and the work information from the work agent B. Then, the work agent A learns a skill group, the skill model, and a task table, and creates a work history map.

Here, the skill model of the work agent B may be learned by the work agent B itself, or may be learned by the work agent A.

Then, for example, the user instructs the work agent A or the work agent B to execute a task (main task). In a case where the work agent B is instructed to execute the task, the work agent B transmits the information to the work agent A.

The work agent A breaks down the main task into subtasks, instructs the work agent B to execute a part of the subtasks, and executes the rest of the subtasks by itself. That is, the work agent A executes actions that have been further broken down from the subtasks. Further, the work agent A detects a pre-state, a post-state, and other information, and obtains a reward for the corresponding action.

The work agent B breaks down the subtasks instructed by the work agent A into actions and executes the actions. Further, the work agent B detects a pre-state, a post-state, and other information, and obtains a reward for the corresponding action.

Then, the work agent A and the work agent B share information with each other. For example, the work agent A and the work agent B exchange work reports with each other. Alternatively, only the work agent B transmits the work report to the work agent A.

Then, the work agent A learns the skill group, the skill model, and the task table.

Similar processes are repeated hereinafter.

As described above, each work agent 301 is capable of cooperating with each other to execute a task while sharing information. Further, the task model of each work agent 301 is learned, and each work agent 301 is appropriately assigned the task according to this result. This increases the work efficiency. As a result, it is possible to shorten the working time and reduce the number of work agents 301 that execute the task.

### <<3. Modification>>

Hereinafter, a modification of the above-described embodiments of the present technology will be described.

For example, in the agent system 10 in FIG. 1, the work agent 12 can have a part of the functions of the instruction agent 11 or the instruction agent 11 can have a part of the functions of the work agent 12.

For example, each work agent 12 may learn its own skill model and transmit the learned skill model to the instruction agent 11.

Further, for example, the instruction agent 11 may break down a subtask into actions and instruct the work agents 12 in units of actions.

In addition, for example, in the agent system 10, each work agent 12 may communicate with each other to share information and the like.

Further, in the above description, each work agent 12 reports the work to the instruction agent 11 each time one action has been executed. However, it is not necessary to report the work for each action. For example, each work agent 12 may report the work each time a plurality of actions has been executed, or each time a subtask has been executed.

Further, for example, even in a case where a part or all of the work agents 12 are replaced by humans, the instruction agent 11 is capable of learning the skill model of each human or the skill models of each human and each work agent 12 and performing work assignment through similar processes.

In addition, a part or all of the contents presented in FIGs. 11 to 13 can be mutually combined with each other.

Further, for example, in a case where a skill defining the skill group has been newly added, the added skill may be presented in the recommended spec field 232 in FIG. 13. With this configuration, the user is able to easily add an agent having the newly added skill as an execution member. This improves work efficiency.

In addition, in the agent system 300 in FIG. 21, each work agent 301 may autonomously act, for example.

For example, information such as the skill model and state of each work agent 301 is shared among each work agent 301. Then, for example, in a case where a task is given to at least one among each work agent 301 and it is more efficient for the work agent 301, which has been given the task, to execute the given task by itself, the work agent 301 executes the task by itself. On the other hand, in a case where the work agent 301, which has been given the task, cannot execute the given task, in a case where it is more efficient for another work agent 301 to execute the task, or in a case where it is more efficient for the work agent 301 to cooperate with another work agent 301, the work agent 301 requests another work agent 301 to execute all or a part of the task.

This configuration allows each work agent 301 to efficiently execute the task in an autonomous and cooperative manner.

### <<4. Application Example>>

The series of processes described above can be executed by hardware or software. In a case where the series of processes is executed by software, a program constituting the software is installed in a computer. Here, the computer includes a computer incorporated in dedicated hardware, a general-purpose personal computer, for example, that is capable of executing various functions by installing various programs, and the like.

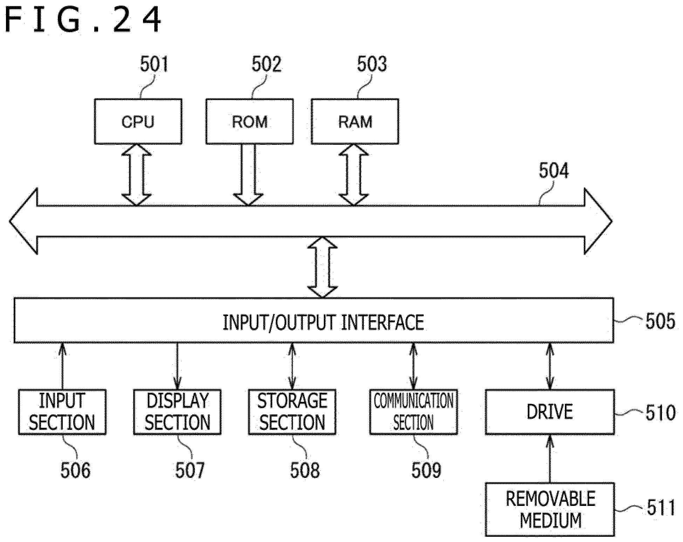

FIG. 24 is a block diagram depicting an example of a configuration of hardware of a computer in which a program executes the series of processes described above.

In the computer, a central processing unit (CPU) 501, a read only memory (ROM) 502, and a random access memory (RAM) 503 are mutually connected to each other via a bus 504.

In addition, an input/output interface 505 is connected to the bus 504. An input section 506, an output section 507, a storage section 508, a communication section 509, and a drive 510 are connected to the input/output interface 505.

The input section 506 includes a keyboard, a mouse, a microphone, and the like. The output section 507 includes a display, a speaker, and the like. The storage section 508 includes a hard disk, a non-volatile memory, and the like. The communication section 509 includes a network interface and the like. The drive 510 drives a removable medium 511 such as a magnetic disk, an optical disk, a magneto-optical disk, or a semiconductor memory.

In the computer configured as described above, for example, the CPU 501 loads the program stored in the storage section 508 into the RAM 503 via the input/output interface 505 and the bus 504 and executes the program, whereby the series of processes described above is performed.

The program to be executed by the computer (CPU 501) can be recorded and provided on the removable medium 511 as a package medium or the like, for example. Further, the program can be provided via a wired or wireless transmission medium such as a local area network, the Internet, or digital satellite broadcasting.

In the computer, the program can be installed in the storage section 508 via the input/output interface 505 by attaching the removable medium 511 to the drive 510. Further, the program can be received by the communication section 509 via a wired or wireless transmission medium and installed in the storage section 508. Additionally, the program can be installed in the ROM 502 or the storage section 508 in advance.

It is noted that the program executed by the computer may be a program that performs processes in chronological order in the order described in the present specification or may be a program that performs processes in parallel or at necessary timing such as on occasions of calls.

Further, a plurality of computers may collaborate with each other to perform the processes described above. Moreover, a computer system includes one or the plurality of computers that performs the processes described above.

Further, in the present specification, a system means a group of a plurality of constituent elements (apparatuses, modules (parts), and the like), regardless of whether all the constituent elements are inside the same casing. Therefore, a plurality of apparatuses housed in different casings and connected via a network and one apparatus housing a plurality of modules in one casing are both systems.

In addition, the embodiments of the present technology are not limited to the embodiments described above, and various modifications can be made without departing from the gist of the present technology.

For example, the present technology can be configured as cloud computing in which one function is shared and processed in cooperation by a plurality of apparatuses through a network.

Further, each of the steps described in the flowcharts described above can not only be executed by one apparatus but also be shared and executed by a plurality of apparatuses.

In addition, in a case where a plurality of processes is included in one step, the plurality of processes included in the one step can not only be executed by one apparatus but also be shared and executed by a plurality of apparatuses.

Further, the effects described in the present specification are merely examples and not limitative, and other effects may be provided.

Further, for example, the present technology can also be configured as follows.
(1) An information processing apparatus including:
   an allocation section configured to assign at least a part of a task to two or more agents on a basis of a skill model indicating a skill of each of the agents.
(2) The information processing apparatus according to (1), further including:
   a presentation control section configured to control presentation of information regarding at least one of the task and agents.
(3) The information processing apparatus according to (2), in which the presentation control section controls presentation of a skill of an agent capable of increasing efficiency of the task.
(4) The information processing apparatus according to (2) or (3), in which the presentation control section controls presentation of a skill necessary for the task.
(5) The information processing apparatus according to any one of (2) to (4), in which the presentation control section controls presentation of skills of agents configured to execute the task.
(6) The information processing apparatus according to (5), in which the presentation control section further controls presentation of a skill of an agent capable of serving as an addition or a replacement.
(7) The information processing apparatus according to any one of (1) to (6), further including:
   a communication section configured to receive, from each of the agents, a work report that includes information including:
   an action executed;
   a state before execution of the action; and
   a reward for the action.
(8) The information processing apparatus according to (7), further including:
   a learning section configured to learn, on the basis of the work report, data to be used for allocation of the task.
(9) The information processing apparatus according to (8), in which the learning section learns a type of a skill defining the skill model on the basis of a result of clustering of data distributed, the data including a combination of the state and the action and being generated on the basis of the work report.
(10) The information processing apparatus according to (8) or (9), in which the learning section learns data indicating a skill necessary for each of tasks on the basis of the work report.
(11) The information processing apparatus according to any one of (8) to (10), in which the learning section learns the skill model of each of the agents on the basis of the work report.
(12) The information processing apparatus according to any one of (1) to (11), further including:
   a communication section configured to receive the skill model of each of the agents.
(13) The information processing apparatus according to any one of (1) to (12), in which the allocation section assigns at least the part of the task to the agents further on the basis of a state of each of the agents.
(14) The information processing apparatus according to any one of (1) to (13), in which the allocation section divides the task into a plurality of subtasks and assigns the subtasks to the agents.
(15) The information processing apparatus according to (14), in which the allocation section further divides the subtasks into actions and assigns the actions to the agents, the actions being execution units of the agents.
(16) The information processing apparatus according to any one of (1) to (15), further including:
   an execution section configured to execute the task,
   in which each of the two or more agents includes the information processing apparatus.
(17) An information processing method including:
   an allocation step of assigning at least a part of a task to two or more agents on a basis of a skill model indicating a skill of each of the agents.

### [Reference Signs List]

10 ... Agent system, 11 ... Instruction agent, 12-1 to 12-n ... Work agent, 51 ... Information obtaining section, 52 ... Communication section, 53 ... Information processing section, 54 ... Presentation section, 61 ... Allocation section, 62 ... Presentation control section, 63 ... Learning section, 101 ... Information obtaining section, 102 ... Communication section, 103 ... Information processing section, 104 ... Execution section, 111 ... Execution control section, 112 ... Learning section, 300 ... Agent system, 301-1 to 301-3 ... Work agent, 351 ... Information obtaining section, 352 ... Communication section, 353 ... Information processing section, 354 ... Presentation section, 361 ... Allocation section, 362 ... Presentation control section, 363 ... Execution control section, 364 ... Learning section

## Claims

1. An information processing apparatus comprising:
an allocation section configured to assign at least a part of a task to two or more agents on a basis of a skill model indicating a skill of each of the agents.

2. The information processing apparatus according to claim 1, further comprising:
a presentation control section configured to control presentation of information regarding at least one of the task and agents.

3. The information processing apparatus according to claim 2, wherein the presentation control section controls presentation of a skill of an agent capable of increasing efficiency of the task.

4. The information processing apparatus according to claim 2, wherein the presentation control section controls presentation of a skill necessary for the task.

5. The information processing apparatus according to claim 2, wherein the presentation control section controls presentation of skills of agents configured to execute the task.

6. The information processing apparatus according to claim 5, wherein the presentation control section further controls presentation of a skill of an agent capable of serving as an addition or a replacement.

7. The information processing apparatus according to claim 1, further comprising:
a communication section configured to receive, from each of the agents, a work report that includes information including:
an action executed;
a state before execution of the action; and
a reward for the action.

8. The information processing apparatus according to claim 7, further comprising:
a learning section configured to learn, on the basis of the work report, data to be used for allocation of the task.

9. The information processing apparatus according to claim 8, wherein the learning section learns a type of a skill defining the skill model on the basis of a result of clustering of data distributed, the data including a combination of the state and the action and being generated on the basis of the work report.

10. The information processing apparatus according to claim 8, wherein the learning section learns data indicating a skill necessary for each of tasks on the basis of the work report.

11. The information processing apparatus according to claim 8, wherein the learning section learns the skill model of each of the agents on the basis of the work report.

12. The information processing apparatus according to claim 1, further comprising:
a communication section configured to receive the skill model of each of the agents.

13. The information processing apparatus according to claim 1, wherein the allocation section assigns at least the part of the task to the agents further on the basis of a state of each of the agents.

14. The information processing apparatus according to claim 1, wherein the allocation section divides the task into a plurality of subtasks and assigns the subtasks to the agents.

15. The information processing apparatus according to claim 14, wherein the allocation section further divides the subtasks into actions and assigns the actions to the agents, the actions being execution units of the agents.

16. The information processing apparatus according to claim 1, further comprising:
an execution section configured to execute the task,
wherein each of the two or more agents includes the information processing apparatus.

17. An information processing method comprising:
an allocation step of assigning at least a part of a task to two or more agents on a basis of a skill model indicating a skill of each of the agents.
